# EUROPEAN PATENT SPECIFICATION

(11) **EP 4 187 293 B1**
(45) Date of publication and mention of the grant of the patent: **28.01.2026**
(21) Application number: 21857161.0
(22) Date of filing: 23.03.2021
(51) Int. Cl.: G02B 6/38, G02B 6/44, G09F 3/00, G09F 3/16

(54) **OPTICAL FIBER CONNECTOR ASSEMBLY, TAG SYSTEM AND TAG MODULE**
GLASFASERVERBINDERANORDNUNG, ETIKETTENSYSTEM UND ETIKETTENMODUL
ENSEMBLE CONNECTEUR DE FIBRE OPTIQUE, SYSTÈME D'ÉTIQUETTE ET MODULE D'ÉTIQUETTE

(30) Priority: 21.08.2020 CN 202010852604
(43) Date of publication of application: 31.05.2023
(73) Proprietor: Huawei Technologies Co., Ltd., Shenzhen, Guangdong 518129 (CN)
(72) Inventor: WEN, Yida, Shenzhen, Guangdong 518129 (CN); HU, Jian, Shenzhen, Guangdong 518129 (CN); KUANG, Li, Shenzhen, Guangdong 518129 (CN)
(74) Representative: Pfenning, Meinig & Partner mbB
(86) International application number: PCT/CN2021/082336
(87) International publication number: WO 2022/037058

(56) References cited:
- CN-A- 102 708 352
- CN-A- 102 742 293
- CN-A- 103 809 252
- CN-A- 112 034 559
- CN-U- 205 608 250
- JP-A- 2010 224 488
- JP-A- 2019 066 889
- US-B1- 6 644 866
- US-B1- 8 426 733

## Description

### TECHNICAL FIELD

This application relates to the field of optical fiber communication, and in particular, to an optical fiber connector assembly, a label system, and a label module.

### BACKGROUND

An optical network includes a network node. The network node includes a plurality of adapters, and each adapter is configured to insert and fix an optical fiber connector assembly. The network node includes an increasing quantity of adapters, and optical fiber connector assemblies inserted on the adapters need to be identified.

In a conventional technology, a flag label is usually used to identify the optical fiber connector assembly inserted on each adapter of the network node. Specifically, an identifier used to identify the optical fiber connector assembly is set in the flag label.

However, the flag label is made of a relatively soft material and occupies a relatively large area. As a result, flag labels are intertwined with each other, and the flag label is intertwined with the optical fiber connector assembly, increasing difficulty in maintaining the network node. A case in which the flag labels are easily blocked by each other causes low efficiency and poor accuracy of obtaining the identifier that is set in the flag label. The flag label cannot be recorded digitally, and the identifier in the flag label is read manually only, resulting in low efficiency and poor accuracy.

US 8 426 733 B1 discloses an apparatus for organizing and identifying a conduit or multiple conduits and, more particularly, to a device for connecting and managing cables used in electronic systems.

### SUMMARY

Embodiments of the present invention provide an optical fiber connector assembly according to claim 1 and a label system according to claim 5, so as to reduce difficulty in maintaining a network node and improve efficiency and accuracy of recognizing the optical fiber connector assembly.

### BRIEF DESCRIPTION OF DRAWINGS

FIG. 1 is an example structural diagram of an optical network according to an embodiment of this application;
FIG. 2 is an example structural diagram of an embodiment of a network node according to Embodiment 1 of this application;
FIG. 3 is an example structural diagram of an embodiment of a network node according to Embodiment 1 of this application;
FIG. 4 is an example structural diagram of an embodiment of a network node on which an optical fiber connector assembly is inserted according to Embodiment 1 of this application;
FIG. 5 is an example structural diagram of an embodiment of an optical fiber connector assembly according to Embodiment 1 of this application;
FIG. 6A is an example structural diagram of an embodiment of a first label module according to Embodiment 1 of this application;
FIG. 6B is an example structural diagram of an embodiment of a first label module according to Embodiment 1 of this application; FIG. 7 is an example structural diagram of another embodiment of a network node on which an optical fiber connector assembly is inserted according to Embodiment 1 of this application;
FIG. 8 is an example diagram of an application scenario of a network node according to Embodiment 1 of this application;
FIG. 9 is an example diagram of another application scenario of a network node according to Embodiment 1 of this application;
FIG. 10 is an example structural diagram of another embodiment of a network node on which an optical fiber connector assembly is inserted according to Embodiment 1 of this application;
FIG. 11A is an example structural diagram of an embodiment of a network node on which an optical Example 1 fiber connector assembly is inserted according to of this application;
FIG. 11B is an example structural diagram of another embodiment of a network node on which an optical Example 1 fiber connector assembly is inserted according to of this application;
FIG. 11C is an example structural diagram of another embodiment of a network node on which an optical fiber connector assembly is inserted according to Example 1 of this application;
FIG. 12 is an example structural diagram of an embodiment of an optical fiber connector assembly according to Example 2 Emotes of this application;
FIG. 13 is an example structural diagram of an embodiment of an optical fiber connector assembly according to Example 2 Emotes of this application;
FIG. 14 is an example structural diagram of an embodiment of an optical fiber connector assembly according to Example 2 of this application;
FIG. 15 is an example structural diagram of an embodiment of an optical fiber connector assembly according to Example 2 of this application;
FIG. 16 is an example structural diagram of an embodiment of an optical fiber connector assembly Example 3 according to of this application;
FIG. 17 is an example structural diagram of an embodiment of a first label module according to Example 3 of this application;
FIG. 18 is an example structural diagram of an embodiment of an optical fiber connector assembly Example 4 according to of this application;
FIG. 19 is an example structural diagram of an embodiment of an optical fiber connector assembly Example 4 according to of this application; and
FIG. 20 is an example structural diagram of another embodiment of an optical fiber connector assembly Example 4 according to of this application.

### DESCRIPTION OF EMBODIMENTS

The following describes the technical solutions in embodiments of the present invention with reference to the accompanying drawings in embodiments of the present invention. It is clear that the described embodiments are merely some rather than all of embodiments of the present invention.

This application provides an optical fiber connector assembly. To better understand the optical fiber connector assembly provided in this application, the following first describes an optical network system to which the optical fiber connector assembly is applied.

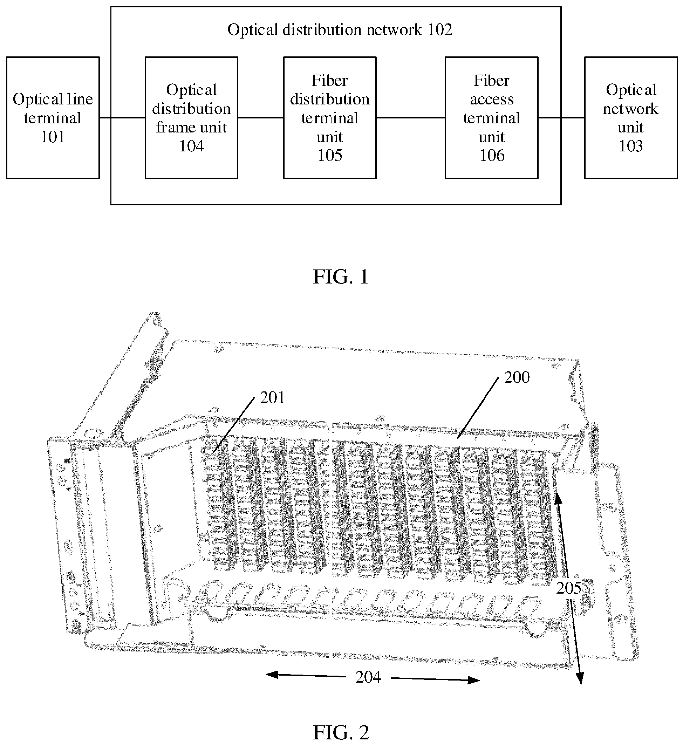

As shown in FIG. 1, FIG. 1 is an example structural diagram of an optical network according to an embodiment of this application. It can be learned from FIG. 1 that, in this application, illustrative description is provided by using an example in which the optical fiber connector assembly is applied to a passive optical network (PON) system.

The PON system includes an optical line terminal (OLT) 101. The OLT 101 is configured to provide a network-side interface for an optical access network (OAN). The OLT 101 is connected to a network-side device (such as a switch or a router) at an upper layer, and a lower layer is connected to one or more optical distribution networks (ODN) 102.

The ODN 102 includes a passive optical splitter for optical power distribution, and a trunk optical cable connected between the passive optical splitter and the OLT 101. The trunk optical cable is configured to implement optical signal transmission between the OLT 101 and the ODN 102. The ODN 102 further includes branch optical cables connected between the passive optical splitter and optical network units (ONU) 103. The branch optical cable is configured to implement optical signal transmission between the ODN 102 and the ONU 103.

When the OLT 101 needs to transmit a downlink optical signal to the ONU 103, the ODN 102 transmits the downlink optical signal from the OLT 101 to each ONU by using the passive optical splitter. Similarly, when the ONU 103 needs to transmit uplink optical signals to the OLT 101, the ODN converges the uplink optical signals from the ONUs 103 and transmits the same to the OLT 101.

The ONU 103 provides a user-side interface for the OAN and is connected to the ODN 102. If the ONU 103 provides a user port function at the same time, for example, the ONU provides an Ethernet user port or a plain old telephone service (POTS) user port, the ONU 103 is referred to as an optical network terminal (ONT). In this application, the ONU or the ONT is collectively referred to as an ONU.

To implement optical signal transmission, an optical cable output from the OLT 101 is connected to an optical distribution frame (ODF) unit 104 included in the ODN 102. The ODF unit 104 may include one or more ODFs.

Through distribution of the ODF unit 104, the output optical cable is connected to a fiber distribution terminal (FDT) unit 105. The FDT unit 105 may include one or more FDTs.

The FDT unit 105 is configured to perform secondary distribution for optical cables. A management range of one FDT unit 105 may be one cell or one street, and a quantity of optical fiber connector assemblies connected to the FDT unit 105 may be selected based on a quantity of users who need to be managed by the FDT unit 105.

The FDT unit 105 is connected to a fiber access terminal (FAT) unit 106 by using an optical cable. The FAT unit 106 includes one or more FATs.

The FAT unit 106 is connected to the ONU 103. The FAT unit 106 is a user access point configured to connect a drop cable. The drop cable refers to a section of optical cable from the FAT unit 106 to a house of the user.

The optical fiber connector assembly provided in this application is applied to a patch cord or a pigtail. In this example, illustrative description is provided by using an example in which the optical fiber connector assembly is applied to a patch cord. To be specific, two ends of one patch cord are respectively connected to two optical fiber connector assemblies. The patch cord may be applied to the ODF unit 104, the FDT unit 105, or the FAT unit 106, which is not specifically limited.

For example, the patch cord is connected in any one of the following scenarios.

The patch cord is connected between two interconnected ODFs included in the ODF unit 104, between different adapters of a same ODF, between the OLT 101 and the ODF, between two interconnected FDTs included in the FDT unit 105, between different adapters of a same FDT, between two interconnected FATs included in the FAT unit 106, between the FAT unit 106 and an access terminal box (ATB), or between the FAT unit 106 and the ONU 103.

Description is provided below by using an example in which two ends of the patch cord are connected between different adapters of a same FDT.

The two ends of the patch cord are respectively connected to a first optical fiber connector assembly and a second optical fiber connector assembly. It can be learned that the first optical fiber connector assembly and the second optical fiber connector assembly are connected to different adapters of a same FDT, for example, an adapter A and an adapter B.

When the first optical fiber connector assembly of the patch cord is accurately inserted into the adapter A, and the second optical fiber connector assembly of the patch cord is accurately inserted into the adapter B, transmission of an optical signal via the patch cord is effectively ensured.

If the first optical fiber connector assembly is not inserted into the adapter A, and/or the second optical fiber connector assembly is not inserted into the adapter B, the patch cord cannot implement optical signal transmission.

The optical fiber connector assembly provided in this application has a plurality of embodiments for implementation. For better understanding, the following describes the embodiments one by one.

It should be noted that the foregoing embodiments shown in this application are merely intended for describing the technical solutions of the present invention rather than limiting the present invention.

### Embodiment 1

The following describes a specific structure of an optical fiber connector assembly provided in this application. First, refer to FIG. 2 to FIG. 4. The network nodes shown in FIG. 2, FIG. 3, and FIG. 4 are structural diagrams of the network node at different visual angles.

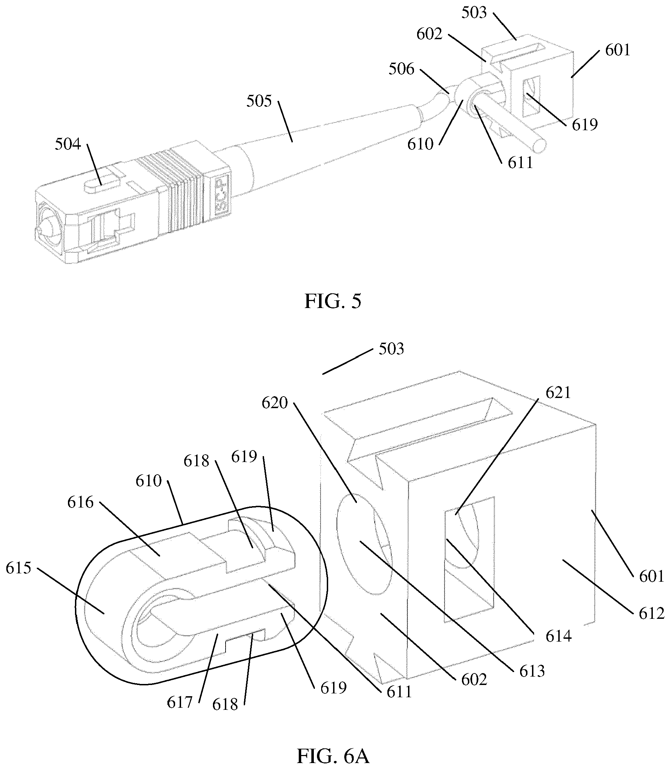

The network node includes a plug-in frame 200, and a plurality of adapters are fixed on the plug-in frame 200. The following describes a specific structure of the optical fiber connector assembly shown in this embodiment with reference to FIG. 5.

An optical fiber connector assembly 500 includes an optical fiber connector body and a first label module 503. Specifically, the first label module 503 and the optical fiber connector body shown in this embodiment are two separate devices. When the optical fiber connector assembly 500 needs to be identified by using the first label module 503, the first label module 503 may be connected to the optical fiber connector body.

An adapter 201 shown in this embodiment has a plug interface, and the plug interface is configured to insert and fix the optical fiber connector body. In a state in which the optical fiber connector body is inserted into the plug interface, optical signal interaction may be performed between the optical fiber connector body and the network node.

Specifically, the optical fiber connector body has a plug 504 and a tail ferrule 505. The tail ferrule 505 is connected to an optical cable 506. The plug 504 is configured to be inserted into the adapter, to implement a connection between the optical fiber connector assembly 500 and the adapter.

A type of the optical fiber connector body in this embodiment is not limited. For example, the type of the optical fiber connector body shown in this embodiment is any one of the following:
a ferrule connector (FC) type optical fiber connector, a square connector (SC) type optical fiber connector, a lucent connector (LC) type optical fiber connector, a straight tip (ST) type optical fiber connector, or a fiber distributed data interface (FDDI) type optical fiber connector.

The following describes the first label module 503 shown in this embodiment.

First, a positional relationship between the first label module 503 and the optical fiber connector assembly 500 is described.

The first label module 503 shown in this embodiment is connected to the optical cable 506. In this embodiment, a positional relationship between the first label module 503 connected to the optical cable 506 and the optical fiber connector assembly 500 is not limited, provided that the first label module 503 is connected to the optical cable 506.

For example, as shown in FIG. 5, the first label module 503 is connected at a position close to the tail ferrule 505.

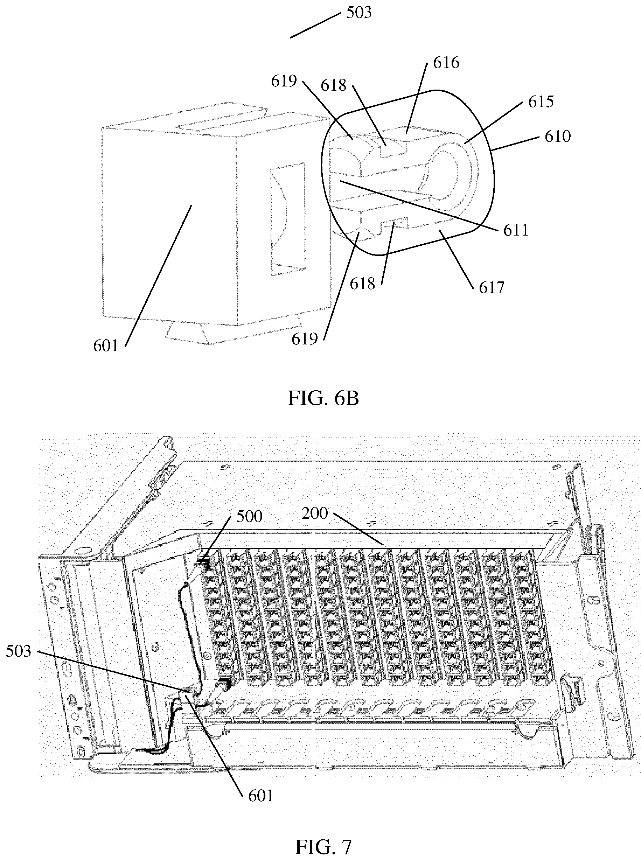

For another example, as shown in FIG. 7, the first label module 503 is connected at a position away from the optical fiber connector assembly 500.

In addition, a specific structure of the first label module 503 is described.

The first label module 503 shown in this embodiment is configured to indicate the optical fiber connector body. Specifically, the first label module 503 has a first surface 601, the first surface 601 is configured to set label information, and the label information is used to identify the optical fiber connector body.

In this embodiment, the label information used to identify the optical fiber connector body is set on the first surface 601. The label information is not limited in this embodiment, provided that the label information can uniquely identify the optical fiber connector body. In other words, different label information is used to identify different optical fiber connector bodies. For example, the label information may be two-dimensional code, a unique identifier, a bar code, or digital text information that is used to uniquely identify the optical fiber connector body.

The following describes a position of the first surface 601 shown in this embodiment. It should be clear that the description of the position of the first surface 601 in this embodiment is an optional example, which is not limited, provided that the first surface 601 is located within a visual range or a photographing range.

With reference to examples shown in FIG. 2 to FIG. 7, the plug-in frame 200 shown in this embodiment may be a high-density plug-in frame. The high-density plug-in frame means that a plurality of optical fiber connector assemblies are inserted in a unit area of a plug-in frame panel, and a gap between adjacent optical fiber connector assemblies is small. The following describes an arrangement manner of the high-density plug-in frame.

A plurality of adapters included in the plug-in frame 200 form an adapter array. The adapter array includes N rows of adapters arranged along a horizontal direction 204 of the plug-in frame 200, and further includes M columns of adapters arranged along a vertical direction 205 of the plug-in frame 200. The horizontal direction 204 and the vertical direction 205 are perpendicular to each other. Specific values of M and N are not limited in this embodiment.

When the first label module 503 is connected at a position close to the tail ferrule 505, the first surface 601 faces away from a surface of the plug-in frame 200 at positions.

Specifically, the first label module 503 shown in this embodiment has a second surface 602. The second surface 602 is disposed opposite to the surface of the plug-in frame 200 at positions, that is, the second surface 602 is disposed facing the surface of the plug-in frame 200. The first surface 601 and the second surface 602 are two side surfaces of the first label module 503 that face away from each other at positions. From further description provided from a perspective of orientation, it can be learned that, relative to the surface of the plug-in frame 200, the second surface 602 faces inward; and relative to the surface of the plug-in frame 200, the first surface 601 faces outward.

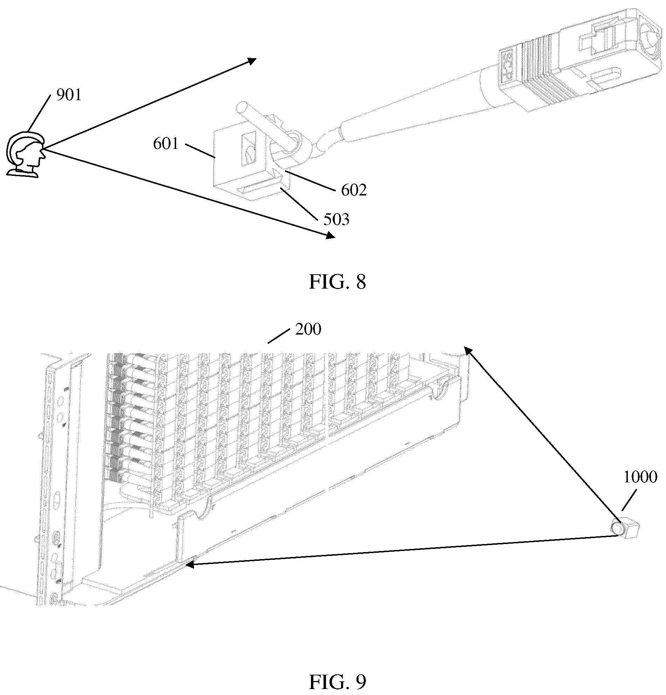

To better understand a positional relationship that the first surface 601 faces away from the surface of the plug-in frame 200 at positions, description is provided below with reference to FIG. 8.

As shown in FIG. 8, it can be learned that if the first label module 503 is located within a line of sight range of a human eye 901, the first surface 601 facing outward is a surface visible to the human eye 901, and the second surface 602 facing inward is a surface invisible to the human eye 901.

It can be learned that, in a state in which the optical fiber connector assembly is inserted on the surface of the plug-in frame 200, the first surface 601 faces away from the surface of the plug-in frame 200 at positions.

In this embodiment, if the entire plug-in frame 200 is located within a visual range of the human eye 901, first surfaces of all optical fiber connector assemblies inserted on the plug-in frame 200 are all located within the visual range of the human eye 901.

Description is provided above by using an example in which the first surface 601 is located within the line of sight range of the human eye 901. The first surface 601 shown in this embodiment is further located within a photographing range of a camera.

As shown in FIG. 9, if the surface of the plug-in frame 200 is located within a photographing range of a camera 1000, specifically, if the plug-in frame 200 is not yet inserted with an optical fiber connector assembly, the camera 1000 takes photographs of the surface of the plug-in frame 200. An obtained target image includes all adapters included in the plug-in frame 200.

If one or more optical fiber connector assemblies have been inserted on the plug-in frame 200, the camera 1000 takes photographs of the surface of the plug-in frame 200. An obtained target image can fully and clearly take photographs of the label information that is set on each first surface 601.

It can be learned from the foregoing description that, the first surface 601 shown in this embodiment is located within the visual range of the human eye and/or within the photographing range of the camera. Illustrative description is provided below by using an example in which the first surface 601 shown in this embodiment is located within the photographing range of the camera.

To ensure that the first surface 601 is located within the photographing range of the camera, in this embodiment, the first surface 601 is parallel to the surface of the plug-in frame 200 (as shown in FIG. 7). In another example, an included angle between the first surface 601 and the surface of the plug-in frame 200 may be alternatively an obtuse angle. A specific angle is not limited in this embodiment, provided that the first surface 601 is located within the photographing range.

It should be clear that, in this embodiment, illustrative description is provided by using an example in which the first surface 601 is of a planar structure. In another example, the first surface 601 may be alternatively in a curved surface or any other shape, provided that the label information that is set on the first surface 601 is located within the photographing range.

It can be learned from the foregoing description that, the first label module 503 is connected to the optical cable 506. To effectively recognize the optical fiber connector body identified by the label information, the label information needs to always be located within the photographing range. In other words, the position of the first label module 503 needs to be fixed. The first label module 503 with a fixed position can effectively ensure that the label information on the first surface 601 of the first label module 503 can always be located within the photographing range. The following describes how to fix the position of the first label module 503.

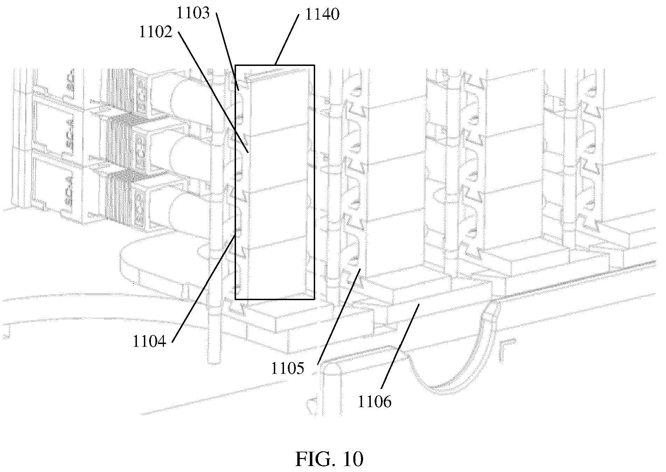

With reference to FIG. 10, any three adjacent label modules in a plurality of label modules fixed on the plug-in frame 200 are used as an example for illustrative description. In this example, illustrative description is provided by using an example in which any three adjacent label modules are a first label module 1102, a second label module 1103, and a third label module 1104.

If positions of the first label module 1102, the second label module 1103, and the third label module 1104 are fixed, label information of the first label module 1102, label information of the second label module 1103, and the third label module 1104 may be always effectively fixed within the photographing range.

In this embodiment, illustrative description is provided by using an example in which the first label module 1102 is located between the second label module 1103 and the third label module 1104.

The first label module 1102 has a first connection structure. In the example shown in FIG. 10, if the second label module 1103 is located above the first label module 1102, the first connection structure is disposed on an upper surface of the first label module 1102. It should be clear that a specific position of the first connection structure is not limited in this embodiment, provided that the first connection structure is located on a surface that is of the first label module 1102 and that faces the second label module 1103.

The first label module 1102 has a second connection structure. In the example shown in FIG. 10, if the third label module 1104 is located below the first label module 1102, the second connection structure is disposed on a lower surface of the first label module 1102. It should be clear that a specific position of the second connection structure is not limited in this embodiment, provided that the second connection structure is located on a surface that is of the first label module 1102 and that faces the third label module 1104.

The following describes a connection manner between the first label module 1102 and the second label module 1103.

The second label module 1103 has a second connection structure. In the example shown in FIG. 10, if the first label module 1102 is located below the second label module 1103, the second connection structure is disposed on a lower surface of the second label module 1103. It should be clear that a specific position of the second connection structure of the second label module 1103 is not limited in this embodiment, provided that the second connection structure of the second label module 1103 is located on a surface that is of the second label module 1103 and that faces the first label module 1102.

In this embodiment, the first connection structure of the first label module 1102 and the second connection structure of the second label module 1103 match with each other and are connected. In a state in which the first connection structure of the first label module 1102 is connected to the second connection structure of the second label module 1103, a connection between the first label module 1102 and the second label module 1103 is implemented.

In this embodiment, specific structures of the first connection structure and the second connection structure are not limited, provided that a connection between two label models at adjacent positions is implemented through the connection between the first connection structure and the second connection structure. In this embodiment, the first connection structure and the second connection structure have one or more of the following connection manners:

### Manner 1

The first connection structure is a clamping protrusion, the second connection structure is a clamping groove, and the connection between the first connection structure and the second connection structure is implemented in a state in which the clamping protrusion is inserted into the clamping groove.

### Manner 2

The first connection structure is a clamping groove, the second connection structure is a clamping protrusion, and the connection between the first connection structure and the second connection structure is implemented in a state in which the clamping protrusion is inserted into the clamping groove.

### Manner 3

The first connection structure is a dovetail, the second connection structure is a dovetail groove, and the connection between the first connection structure and the second connection structure is implemented in a state in which the dovetail is inserted into the dovetail groove.

### Manner 4

The first connection structure is a dovetail groove, the second connection structure is a dovetail, and the connection between the first connection structure and the second connection structure is implemented in a state in which the dovetail is inserted into the dovetail groove.

### Manner 5

The first connection structure is a buckle, the second connecting structure is a clamping slot, and the connection between the first connection structure and the second connection structure is implemented in a state in which the buckle is engaged and fixed in the clamping slot.

### Manner 6

The first connection structure is a clamping slot, the second connecting structure is a buckle, and the connection between the first connection structure and the second connection structure is implemented in a state in which the buckle is engaged and fixed in the clamping slot.

### Manner 7

The first connection structure is a first magnetic member, the second connection structure is a second magnetic member, magnetic poles of the first magnetic member and the second magnetic member are different, and the connection between the first connection structure and the second connection structure is implemented in a state in which the first magnetic member and the second magnetic member are attracted to each other for fixing.

### Manner 8

The first connection structure and the second connection structure may be integrally molded. For a structure with a hole between the first connection structure and the second connection structure, in a process of assembling the optical fiber connector assembly, an optical cable connected to the optical fiber connector assembly is penetrated into the hole between the first connection structure and the second connection structure in advance.

### Manner 9

The first connection structure may be a structure such as a strap or an adhesive tape, and the first connection structure connects the optical cable to the second connection structure. For example, when the first connection structure is a strap, the optical cable may be tightly connected to the second connection structure by using the strap. For another example, when the first connection structure is an adhesive tape, the optical cable may be bonded to the second connection structure by using the adhesive tape.

The second connection structure of the first label module 1102 is connected to a first connection structure of the third label module 1104. For description of a connection manner between the second connection structure of the first label module 1102 and the first connection structure of the third label module 1104, refer to the foregoing description of the connection manner between the first connection structure of the first label module 1102 and the second connection structure of the second label module 1103. Details are not described again.

According to the foregoing descriptions of the connection manners between the first label module 1102, the second label module 1103, and the third label module 1104, it can be learned that, among the plurality of label modules inserted and fixed on the plug-in frame 200, structures of the first connection structures of different label modules are the same. For example, the first connection structures of the plurality of label modules inserted and fixed on the plug-in frame 200 are all dovetails.

Among the plurality of label modules inserted and fixed on the plug-in frame 200, structures of the second connection structures of different label modules are the same. For example, the second connection structures of the plurality of label modules inserted and fixed on the plug-in frame 200 are all dovetail grooves.

Optionally, the first label module is a first label module 1105 shown in FIG. 10. The first label module 1105 is located at an edge of a label array, and the label array is an array that includes label modules of all optical fiber connector assemblies inserted on the plug-in frame 200.

The first label module shown in this embodiment that is located at the edge of the label array may be at a bottom edge (for example, a last label module in a column of label modules), a top edge (for example, a first label module in a column of label modules), a right edge (for example, a rightmost label module in a row of label modules), or a left edge (for example, a leftmost label module in a row of label modules) of the label array.

In this embodiment, illustrative description is provided by using an example in which the first label module 1105 is located at the bottom edge of the label array.

A fixing plate 1106 is formed on the plug-in frame 200 in an extending way. Along a vertical direction of the plug-in frame 200, the fixing plate 1106 is disposed opposite to the first label module 1102 at positions. A first connection structure is disposed on a surface that is of the fixing plate 1106 and that faces the first label module 1102. The first connection structure of the fixing plate 1106 is connected to the second connection structure of the first label module 1102, to implement a connection between the first label module 1105 located at the edge of the label array and the plug-in frame 200. For descriptions of the first connection structure and the second connection structure, refer to the foregoing description. Details are not described again.

It can be learned that, as shown in this embodiment, a connection between any two adjacent label modules in the label array can be implemented, and a connection between the label array and the plug-in frame can also be implemented, so that an overall position of the label array is fixed. In a state in which the overall position of the label array is fixed, a position of label information of each label module is also fixed, thereby effectively ensuring that all label information on the label array is located within the photographing range.

In the example shown in FIG. 10, a plurality of label modules are adjacent along a vertical position. That the first connection structure is disposed on the upper surface of the first label module 1102, and the second connection structure is disposed on the lower surface of the first label module 1102 is used as an example. If the plurality of label modules are adjacent along a horizontal direction, the first connection structure is disposed on a left side wall of the first label module, and the second connection structure is disposed on a right side wall of the first label module.

In this embodiment, a specific position of the first surface of each label module included in the label array is not limited, provided that the label information on the first surface is located within the photographing range. In this embodiment, description is provided by using an example in which different label information in the label array has a uniform orientation.

That different label information in the label array has a uniform orientation may mean that in the scenario of the high-density plug-in frame shown in FIG. 9, first surfaces 601 of different label modules inserted on the plug-in frame 200 are all parallel to the surface of the plug-in frame 200. In addition, the first surfaces 601 are all located on a same surface, thereby facilitating photographing of the camera. In this way, it is effectively ensured that all label information can be clearly and fully displayed in a photograph that is of the plug-in frame 200 and that is taken by the camera. In another example, included angles between the first surfaces 601 of different label modules and the surface of the plug-in frame 200 may also be different, provided that all the first surfaces 601 are located within the photographing range.

Specifically, still using FIG. 9 as an example, that all first surfaces 601 have a uniform orientation may also mean that first surfaces 601 of a plurality of label modules inserted on the plug-in frame 200 are located on a same surface. The same surface may be of a planar structure, a curved surface structure, or a bump structure, which is not specifically limited, provided that a plurality of pieces of label information located on a same surface are all located within the visual range or the photographing range.

Specifically, referring to FIG. 10, label information of a plurality of interconnected label modules may be located in a label region 1140, and the plurality of pieces of label information located in the label region 1140 all have a same orientation, so that the plurality of pieces of label information located in the label region 1140 are located within the photographing range or the line of sight range.

Optionally, the label information shown in this embodiment may be set on the first surface 601 when the optical fiber connector assembly is delivered. Alternatively, the label information may be set on the first surface 601 when the optical fiber connector assembly is subsequently used.

It can be learned from the foregoing description that, if the first surfaces 601 of all first label modules 503 are located within the photographing range, the target image obtained by photographing the plug-in frame 200 by using the camera is obtained, and the label information including all optical fiber connector assemblies inserted on the plug-in frame 200 can be obtained by using the target image. The optical fiber connector body identified by each piece of label information can be determined based on the label information. It can be learned that recognizing the optical fiber connector body by using the label information shown in this embodiment effectively improves efficiency of recognizing the optical fiber connector body.

The following describes a connection manner between the first label module 503 and the optical cable 506 shown in this embodiment.

With reference to FIG. 5, FIG. 6A, and FIG. 6B, description is provided by using an example in which the first label module 503 is applied to a high-density plug-in frame.

The first label module 503 shown in this embodiment includes a clamping member 610 and a label body 612 that are connected to each other. The label body 612 has the first surface 601 and the second surface 602.

A channel 611 is formed between the clamping member 610 and the second surface 602. The optical cable 506 passes through the channel 611, to implement a connection between the first label module 503 and the optical cable 506.

A rotation through hole 613 is disposed on the second surface 602, a rotation space 614 is disposed in the label body 612, and the rotation space 614 communicates with the rotation through hole 613.

The clamping member 610 includes a clamping member body 615 and a first rotating arm 616 and a second rotating arm 617 that are connected to two ends of the clamping member body 615. Both the first rotating arm 616 and the second rotating arm 617 are provided with a rotation recess 618. An abutting protrusion 619 is formed at an end portion that is of the rotation recess 618 and that is away from the clamping member body 615.

The rotation through hole 613 includes a first orifice 620 and a second orifice 621. The first orifice 620 and the second orifice 621 are opposite to each other at positions along an axial direction of the rotation through hole 613. Both the first orifice 620 and the second orifice 621 communicate with the rotation through hole 613.

The rotation recess 618 is inserted into the rotation through hole 613 via the first orifice 620, and the abutting protrusion 619 abuts against an outer circumferential rim of the second orifice 621. The outer circumferential rim of the second orifice 621 is located in the rotation space 614, so that the rotation recess 618 rotates in the rotation through hole 613.

It can be learned that, by using this manner, the channel 611 is formed between the clamping member body 615 and the second surface 602, and the optical cable 506 passes through the channel 611 to implement the connection between the first label module 503 and the optical cable 506.

It should be clear that the description of the connection manner between the clamping member 610 and the label body 612 shown in this embodiment is an optional example, which is not limited. Any manner such as a magnetic connection manner, an elastic connection manner, or a bonding manner may be used between the clamping member 610 and the label body 612.

Specifically, the magnetic connection manner may be: When the clamping member 610 is a metal piece, and the label body 612 is a magnet, in a state in which the clamping member 610 and the label body 612 are attracted to each other for connection, the connection between the clamping member 610 and the label body 612 is implemented.

The elastic connection manner may be: The first rotating arm 616 and the second rotating arm 617 of the clamping member 610 are made of elastic materials. A first insertion hole is disposed at a position at which the second surface of the label body 612 corresponds to the first rotating arm 616. A second insertion hole is disposed at a position at which the second surface of the label body 612 corresponds to the second rotating arm 617. Moreover, when the first rotating arm 616 is inserted into the first insertion hole, the first rotating arm 616 is in a tension fit with the first insertion hole. When the second rotating arm 617 is inserted into the second insertion hole, the second rotating arm 617 is in a tension fit with the second insertion hole. In this way, the connection between the clamping member 610 and the label body 612 is implemented.

The bonding manner may be: An adhesive layer is disposed between the first rotating arm 616 and the second surface, and an adhesive layer is also disposed between the second rotating arm 617 and the second surface, so that the connection between the clamping member 610 and the label body 612 is implemented by using the adhesive layer.

According to the optical fiber connector assembly shown in this embodiment, the optical fiber connector body is identified by using a label module whose position is fixed, and the first surfaces of different label modules are all located within the visual range or the photographing range. In this way, mutual interference and winding between different label modules and between the label module and the optical fiber connector body are effectively avoided, thereby reducing difficulty in maintaining the network node.

In addition, the label information of different label modules shown in this embodiment is not blocked by each other, and the optical fiber connector body also does not block the label information, thereby effectively improving efficiency and accuracy of obtaining the label information.

If the label information of all optical fiber connector assemblies inserted on the plug-in frame is all located within the photographing range, the target image including all the label information can be obtained by photographing the plug-in frame by using a terminal device (such as a smartphone) with a camera. All optical fiber connector bodies identified by various label information in the target image can be recognized by using the target image without using a dedicated device for recognition, thereby effectively reducing costs and complexity of recognizing the optical fiber connector body identified by the label information. In addition, all the optical fiber connector bodies identified by various label information included in the target image are recognized, thereby improving recognition efficiency.

In addition, for the target image, each piece of label information included in the target image can be recognized by using an image recognition technology, and the label information can be automatically recorded according to the label information, thereby recording and counting all optical fiber connector bodies that are inserted on the plug-in frame, and improving efficiency of managing resources of the optical fiber connector body of the network node.

In the label array shown in this embodiment, different label modules at adjacent positions are in a connection relationship. Therefore, a position of the label array is effectively fixed, so that in subsequent use of the network node, a position shift of the label information of the label array does not occur, thereby effectively ensuring that the label information of the label module can always be located within the photographing range or the visual range, and improving accuracy of recognizing the optical fiber connector body identified by the label information.

The label module shown in this embodiment is connected to the optical cable, so that the position of the label module can be adjusted at any time according to requirements, thereby improving a degree of freedom of adjusting the position of the label module. In the subsequent use of the network node, operation difficulty of adding or reducing label modules and changing the position of the label module at any time according to requirements is increased, thereby improving efficiency.

### Example 1

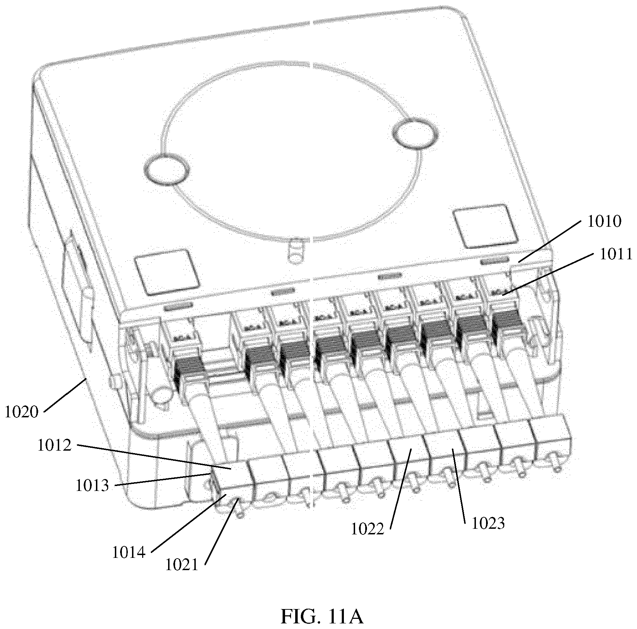

In Embodiment 1, a scenario in which the optical fiber connector assembly is applied to the high-density plug-in frame is used as an example, whereas in this example, that an optical fiber connector assembly is applied to a non-high-density scenario shown in FIG. 11A is used as an example. It should be clear that, the optical fiber connector assembly shown in this example may also be applied to a scenario of a high-density plug-in frame. This is merely an example and is not part of the claimed invention.

As shown in FIG. 11A, in this example, a plug-in frame 1010 included in a network node is a non-example high-density plug-in frame. For example, the plug-in frame 1010 shown in this includes only one row of adapters 1011. It should be clear that description of a structure of the plug-in frame 1010 is an optional example, which is not limited.

The optical fiber connector assembly shown in this example includes an optical fiber connector body and a first label module 503. For description of a specific structure of the optical fiber connector body, refer to Embodiment 1. Details are not described again.

The first label module 503 shown in this example has a first surface 1012, and the first surface 1012 is configured to set label information. For specific descriptions of the label information, refer to Embodiment 1. Details are not described in this example again.

The first surface 1012 shown in this example is located within the visual range or the photographing range. For specific descriptions of the visual range and the photographing range, refer to Embodiment 1. Details are not described again.

Compared with the manner shown in Embodiment 1 in which the first surface 601 faces away from the example, surface of the plug-in frame 200 at positions, in this the first surface 1012 may face away from a bottom surface 1020 of the plug-in frame 1010 at positions. Therefore, in a state in which the camera is above the plug-in frame 1010, the label information that is set on the first surface 1012 may be located within the photographing range of the camera.

Optionally, in another example, the first surface 1012 may face away from a top surface of the plug-in frame 1010 at positions, so that in a state in which the camera is below the plug-in frame 1010, the label information that is set on the first surface is located within the photographing range of the camera.

Optionally, label information of all optical fiber connector assemblies inserted on the plug-in frame 1010 may have a uniform orientation. Specifically, first surfaces 1012 of different label modules inserted on the plug-in frame 1010 are all perpendicular to the surface of the plug-in frame 200. In addition, the first surfaces 1012 are located on a same surface, thereby facilitating photographing of the camera. In this way, it is effectively ensured that all label information can be clearly and fully displayed in a photograph that is of the plug-in frame 1010 and that is taken by the camera. In another example, included angles between the first surfaces 1012 of different label modules and the surface of the plug-in frame 1010 may also be different, provided that all the first surfaces 1012 are located within the photographing range.

Optionally, the first surfaces 1012 of different label modules inserted on the plug-in frame 1010 may be located on a same surface, and the same surface may be of a planar structure or a curved surface structure, so that a plurality of pieces of label information located on the same surface are all located within the visual range or the photographing range.

Optionally, orientations of the first surfaces 1012 of different label modules inserted on the plug-in frame 1010 are all opposite to positions of the surface of the plug-in frame, so that all first surfaces 1012 are located within the visual range or the photographing range.

It can be learned from the foregoing description that, if the first surfaces 1012 of all first label modules 503 are located within the photographing range, the target image obtained by photographing a label array by using the camera is obtained, and the label information including all optical fiber connector assemblies inserted on the plug-in frame 1010 can be obtained by using the target image. The optical fiber connector body identified by each piece of label information can be determined based on the label information. It can be learned that recognizing the optical fiber connector body by using the label information shown in this example effectively improves efficiency of recognizing the optical fiber connector body.

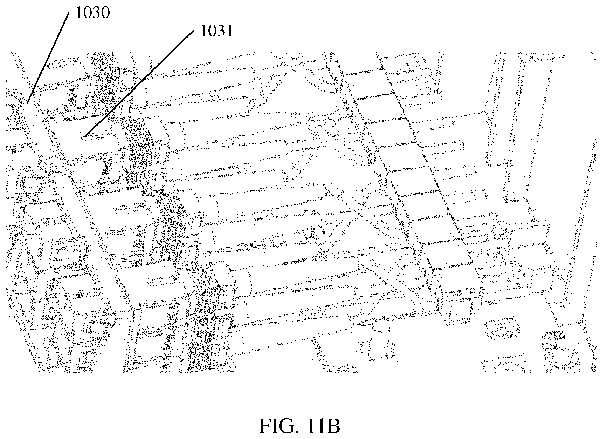

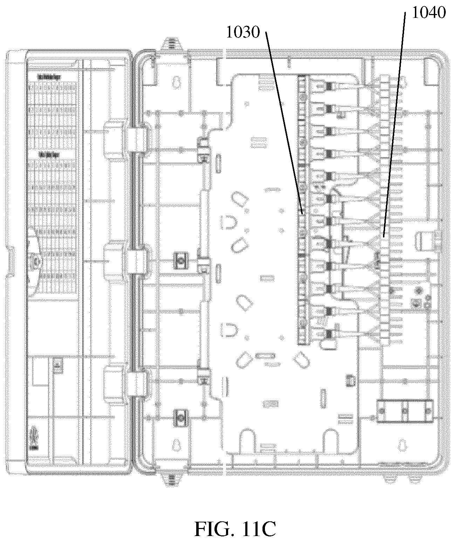

It should be clear that FIG. 11A is an optional example of a plug-in frame in a non-high-density scenario, which is not limited. For example, as shown in FIG. 11B and FIG. 11C, illustrative description is provided by using an example in which the network node is a FAT.

In FIG. 11A, the plug-in frame 1010 includes a row of adapters. Optical cables 506 connected to a plurality of optical fiber connector assemblies inserted in the adapters are connected to label modules located in a same row. It can be learned that in the example shown in FIG. 11A, the adapter and the label array are of single row structures.

In FIG. 11B and FIG. 11C, a plug-in frame 1030 includes a plurality of adapters 1031 arranged in a plurality of rows and a plurality of columns. To enable the label module to identify an optical fiber connector body inserted on any one of the adapters arranged in a plurality of rows and a plurality of columns, each piece of label information included in the label array needs to be located within the photographing range or a line of sight range. Arrangement of a label array in FIG. 11B and FIG. 11C is the same as that of the label array shown in FIG. 11A. To be specific, a plurality of label modules included in the label array are arranged in a same row, thereby effectively ensuring that each piece of label information in the label array is located within the photographing range or the line of sight range. For specific descriptions of the arrangement, refer to FIG. 11A. Details are not described again.

In FIG. 11B and FIG. 11C, among the plurality of adapters arranged in a plurality of rows and a plurality of columns, optical cables connected to optical fiber connector assemblies inserted in different adapters are connected to different label modules 1040 arranged in a same row.

It should be clear that, in this example. illustrative description is provided by using an example in which a plurality of label modules 1040 included in the label array are arranged in a same row. In another example, the plurality of label modules 1040 included in the label array may be alternatively arranged in a same column, provided that the label information of each label module included in the label array is located within the photographing range or the visual range.

The following describes a connection manner between the first label module 503 and the optical cable 506 shown in this embodiment.

In this example, the first label module 503 further includes a third surface 1013 and a fourth surface 1014 that are at opposite positions. A first channel port is disposed on the third surface 1013, and a second channel port 1021 is disposed on the fourth surface 1014. A channel is disposed to penetrate the first label module 503. The channel separately communicates with the first channel port and the second channel port.

It can be learned that the first channel port is disposed facing the optical fiber connector body, and the second channel port is disposed facing away from the optical fiber connector body.

The first surface 1012 shown in this example is separately connected to the third surface 1013 and the fourth surface 1014, and the optical cable 506 passes through the channel.

In this example, there is a connection relationship between different label modules at adjacent positions in the label array. Specifically, a label module 1022 and a label module 1023 shown in FIG. 10 are used as an example. To be specific, the label module 1022 and the label module 1023 are inserted in two adapters, on the plug-in frame 1010, that are at adjacent positions in a same row.

A first connection structure is disposed on a side surface that is of the label module 1022 and that faces the label module 1023, and a second connection structure is disposed on a side surface that is of the label module 1023 and that faces the label module 1022. Through a connection between the first connection structure and the second connection structure, a connection between the label module 1022 and the label module 1023 is implemented. For descriptions of the first connection structure and the second connection structure, refer to Embodiment 1. Details are not described in this example again.

For descriptions of beneficial effects of the optical fiber connector assembly shown in this example, refer to Embodiment 1. Details are not described in this embodiment again.

### Example 2

In this example, a scenario in which an optical fiber connector assembly is applied to a non-high-density plug-in frame is still used as an example. For description of a non-high-density scenario, refer to Example 1. Details are not described again. It should be clear that, the optical fiber connector assembly shown in this embodiment may also be applied to a scenario of a high-density plug-in frame.

For a specific structure of the plug-in frame shown in this example, refer to the description of the specific structure of the plug-in frame 1010 shown in Example 1. Details are not described again.

The optical fiber connector assembly shown in this example includes an optical fiber connector body and a first label module 503. For description of a specific structure of the optical fiber connector body, refer to Embodiment 1. Details are not described again.

The first label module 503 shown in this embodiment has a first surface 1012, and the first surface 1012 is configured to set label information. For specific descriptions of the first surface 1012 and the label information, refer to Example 2. Details are not described in this embodiment again.

The first surface 1012 shown in this example is located within a visual range or a photographing range. For specific descriptions, refer to Example 1. Details are not described again.

The following describes a connection manner between the first label module 503 and an optical cable 506 shown in this example.

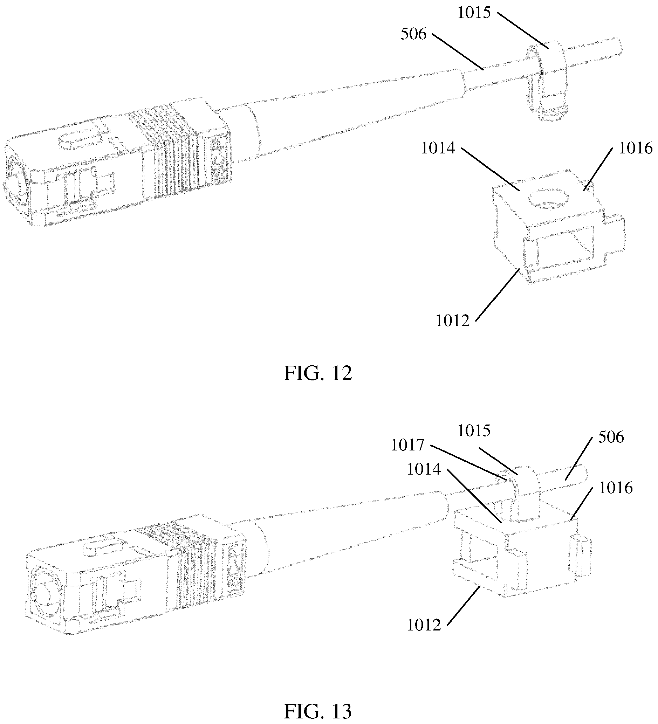

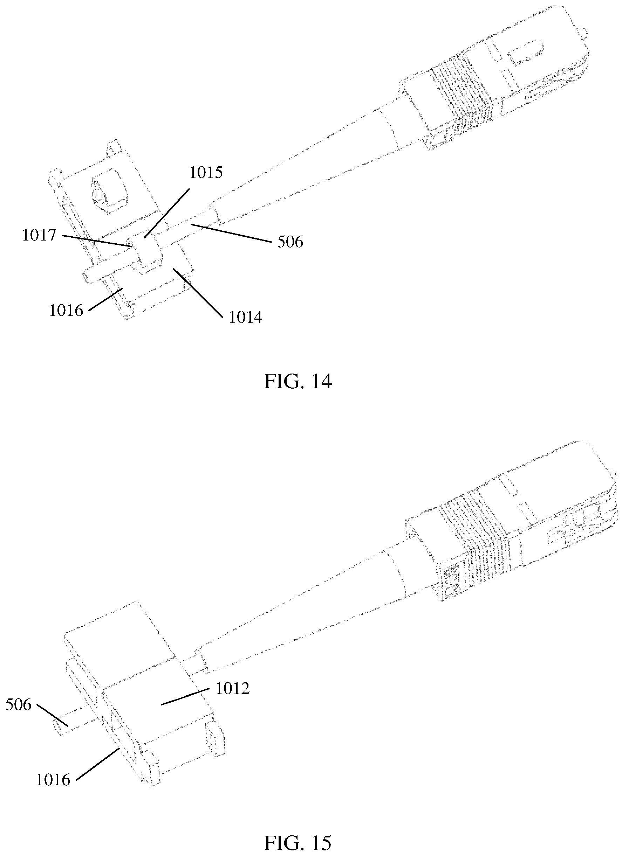

Referring to FIG. 12 to FIG. 15, the first label module 503 shown in this connection manner further includes a connection surface 1014. Specifically, the first surface 1012 faces away from the connection surface 1014 at positions.

The first label module 503 shown in this connection manner includes a clamping member 1015 and a label body 1016 that are connected to each other. For description of a specific structure of the clamping member 1015, refer to Embodiment 1. Details are not described again.

A channel 1017 is formed between the clamping member 1015 and the connection surface 1014. The optical cable 506 passes through the channel 1017, to implement a connection between the first label module 503 and the optical cable 506.

The connection surface 1014 is provided with a rotation through hole. For description of the rotation through hole disposed on the connection surface 1014, refer to the description of the rotation through hole 613 shown in Embodiment 1. Details are not described again.

A rotation space is further disposed in the label body 1016. For specific descriptions of the rotation space, refer to the description of the rotation space 614 in the label body 612 shown in Embodiment 1. Details are not described again.

For a process of how to form the channel 1017 between the clamping member 1015 and the label body 1016, refer to Embodiment 1. Details are not described again.

In this example, there is a connection relationship between different label modules at adjacent positions in a label array. For specific descriptions, refer to Example 1. Details are not described again.

For descriptions of beneficial effects of the optical fiber connector assembly shown in this embodiment, refer to Embodiment 1. Details are not described in this embodiment again.

### Example 3

In this example, in a scenario in which an optical fiber connector assembly is applied to a high-density plug-in frame, for specific descriptions of the high-density plug-in frame, refer to Embodiment 1. Details are not described in this example again. It should be clear that the optical fiber connector assembly shown in this example may be further applied to scenarios such as a non-high-density plug-in frame. Details are not described in this example again. This example is not part of the claimed invention.

The optical fiber connector assembly shown in this example includes an optical fiber connector body and a first label module 503. For description of a specific structure of the optical fiber connector body, refer to Embodiment 1. Details are not described in this example again.

The first label module 503 shown in this example has a first surface 601, and the first surface 601 is configured to set label information. For specific descriptions of the first surface 601 and the label information, refer to Embodiment 1. Details are not described in this example again.

The first surface 601 shown in this example is located within a visual range or a photographing range. For specific descriptions of the visual range and the photographing range, refer to Embodiment 1. Details are not described again.

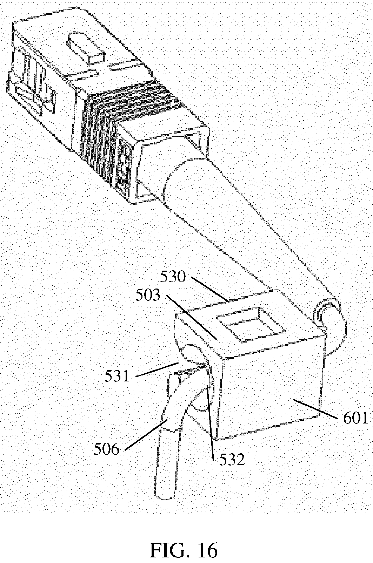

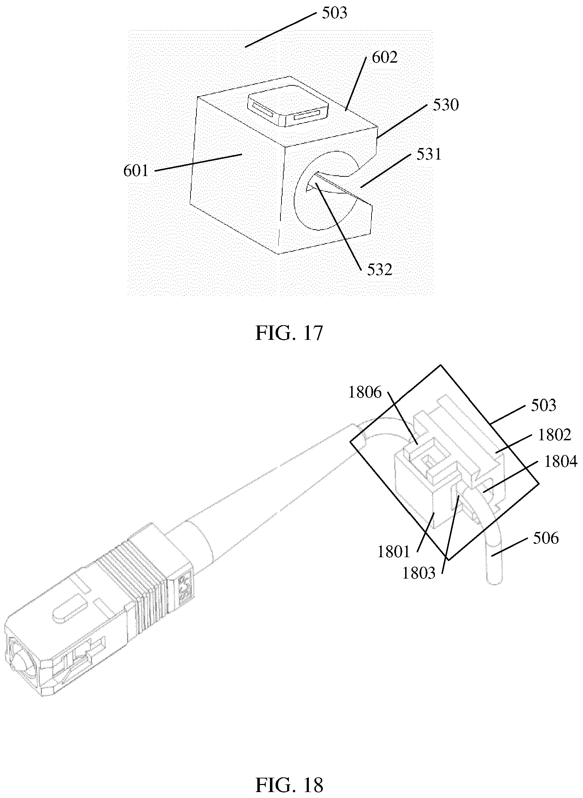

With reference to FIG. 16 and FIG. 17, the following describes a connection manner between the first label module 503 and an optical cable 506 shown in this example.

An opening 531 is disposed on a fifth surface 530 of the first label module 503. For description of a specific position of the fifth surface 530 in this example, refer to the description of the position of the second surface shown in Embodiment 1. Details are not described in this example again.

As shown in this example, a channel 532 is disposed to penetrate the first label module 503. The opening 531 extends along an axial direction of the channel 532, and communicates with the channel 532. The optical cable 506 passes through the opening and penetrates the channel 532, to implement a connection between the optical cable 506 and the optical fiber connector assembly.

Optionally, to improve stability of a connection structure between the optical cable 506 and the first label module 503, in a direction perpendicular to the axial direction of the channel 532, a height of the opening 531 is less than an outer diameter of the optical cable 506.

It can be learned that, when the first label module 503 needs to be connected to the optical cable 506, the optical cable 506 may be squeezed into the channel 532 via the opening 531, so that the optical cable 506 is deformed under pressing force, until the optical cable 506 enters the channel 532. It can be learned that the optical cable 506 can pass through the opening 531 and penetrate the channel 532, to implement a connection between the first label module 503 and the optical cable 506.

Optionally, the first label module further includes a cover, and the cover is disposed at the opening 531. Optionally, the cover and the opening 531 may be fixed in an engagement manner. A specific connection manner is shown as follows:

An elastic buckle is disposed on a side extension structure of the cover. A clamping slot is disposed on an inner side wall of the channel 532. The cover is disposed at the opening 531 in a state in which the elastic buckle is engaged in the clamping slot.

It should be clear that, in this example, description of the connection manner between the cover and the opening 531 is an optional example, which is not limited. For example, the opening 531 and the plug-in frame may be alternatively connected in any manner such as a magnetic connection manner, an elastic connection manner, or a bonding manner. For description of the magnetic connection manner, the elastic connection manner, or the bonding manner, refer to Embodiment 1. Details are not described in this example again.

In this example, there is a connection relationship between different label modules at adjacent positions in a label array. For specific descriptions, refer to Embodiment 1. Details are not described again.

For descriptions of beneficial effects of the optical fiber connector assembly shown in this example, refer to Embodiment 1. Details are not described in this example. again.

### Example 4

In this example, a scenario in which an optical fiber connector assembly is applied to a high-density plug-in frame is used as an example. For specific descriptions of the high-density plug-in frame, refer to Embodiment 1. Details are not described in this example again. It should be clear that, the optical fiber connector assembly shown in this example may also be applied to a scenario of a non-high-density plug-in frame. This is merely an example and is not part of the claimed invention.

The optical fiber connector assembly shown in this example includes an optical fiber connector body and a first label module 503. For description of a specific structure of the optical fiber connector body, refer to Embodiment 1. Details are not described in this example again.

The first label module 503 shown in this example has a first surface, and the first surface is configured to set label information. For specific descriptions of the first surface and the label information, refer to Embodiment 1. Details are not described in this example again.

The first surface shown in this example is located within a visual range or a photographing range. For specific descriptions of the visual range and the photographing range, refer to Embodiment 1. Details are not described again.

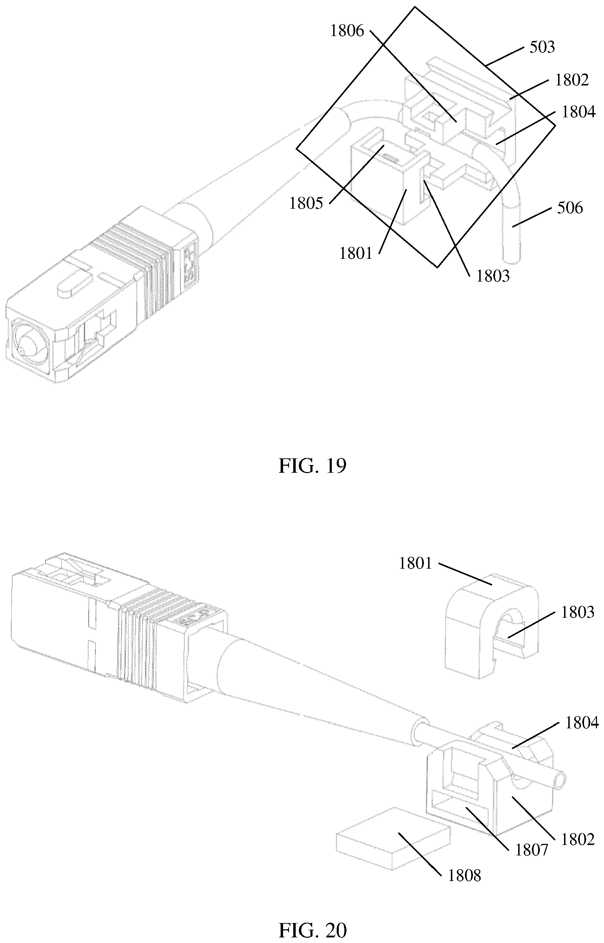

With reference to FIG. 18 and FIG. 19, the following describes a connection manner between the first label module 503 and an optical cable 506 shown in this example.

The first label module 503 includes a first submodule 1801 and a second submodule 1802 that are connected to each other. A first groove 1803 is disposed on the first submodule 1801, and an elastic clamping slot 1805 is disposed on an outer peripheral wall of the first groove 1803. An elastic buckle 1806 is disposed on an outer peripheral wall of the second submodule 1802. The first submodule 1801 is connected to the second submodule 1802 in a state in which the elastic buckle 1806 is engaged in the elastic clamping slot 1805.

A second groove 1804 is disposed on the second submodule. A channel is formed between the first groove 1803 and the second groove 1804 in a state in which the first submodule 1801 is connected to the second submodule 1802.

The optical cable 506 passes through the channel, to implement a connection between the first label module and the optical cable 506.

It should be clear that, the description of the connection manner between the first submodule 1801 and the second submodule 1802 in this example is an optional example, which is not limited, provided that a channel is formed between the first groove 1803 and the second groove 1804 in a state in which the first submodule 1801 is connected to the second submodule 1802. For example, the first submodule 1801 may be connected to the second submodule 1802 in any manner such as an engagement connection manner, a magnetic connection manner, an elastic connection manner, or a bonding manner. For a specific connection manner, refer to Embodiment 1. Details are not described in this example again.

For better understanding, with reference to FIG. 20, the following describes the magnetic connection manner between the first submodule 1801 and the second submodule 1802.

An accommodation space 1807 is disposed on the second submodule 1802, and the accommodation space 1807 communicates with the second groove 1804. Specifically, the second groove 1804 is disposed to have a hollow-out bottom portion. The first label module shown in this example further includes a magnet 1808. The magnet 1808 is inserted into the accommodation space 1807, and the magnet 1808 is exposed from a bottom portion of the second groove 1804 via a hollow-out area at the bottom portion of the second groove 1804.

It can be learned that in a state in which the first submodule 1801 is close to the second submodule 1802, and in a case in which the first submodule 1801 is made of a metal material, the magnet 1808 attracts the first submodule 1801, to implement the connection between the first submodule 1801 and the second submodule 1802.

In this example, there is a connection relationship between different label modules at adjacent positions in a label array. For specific descriptions, refer to Embodiment 1. Details are not described again.

For descriptions of beneficial effects of the optical fiber connector assembly shown in this example, refer to Embodiment 1. Details are not described in this example again.

### Example 5

This example provides a label system. The label system shown in this example includes a plug-in frame and an optical fiber connector assembly inserted on the plug-in frame. For specific descriptions of the plug-in frame and the optical fiber connector assembly, refer to any one of Embodiment 1 or to Example 1 - 4. Details are not described again.

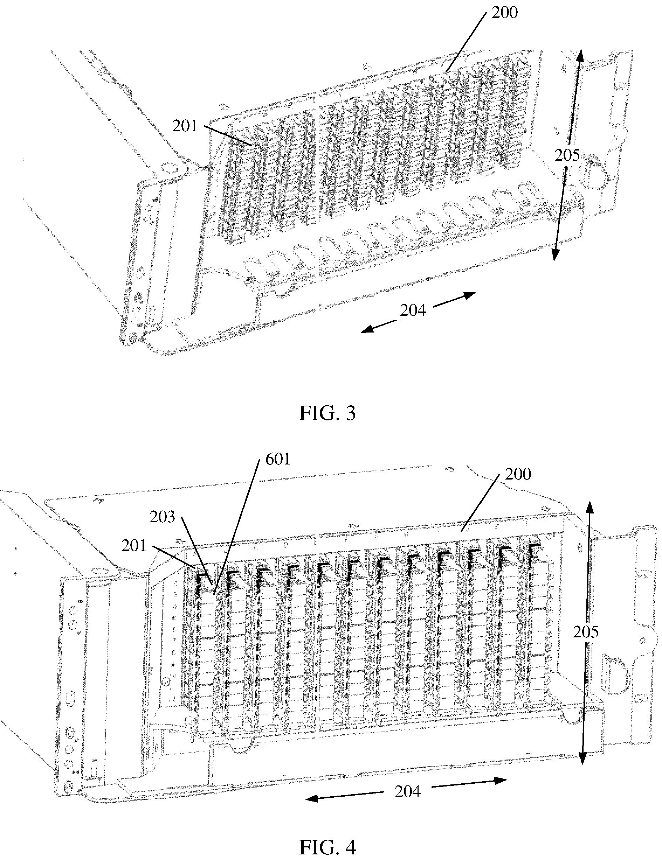

Optionally, in the label system shown in this example, using FIG. 4 as an example, when a plurality of optical fiber connector assemblies are inserted on the plug-in frame 200, to prevent optical cables led out from the optical fiber connector assemblies from intertwining with each other and facilitate sorting of the optical cables in the label system, all the optical cables led out from the optical fiber connector assemblies shown in this example may extend in the plug-in frame 200 in a same direction.

For example, the optical cables connected to various optical fiber connector assemblies are led out from label modules of various optical fiber connector assemblies along a direction 204. The direction 204 is a horizontal direction of the plug-in frame 200, and the direction 204 is specifically a direction on a left side of each optical fiber connector assembly.

Subsequently, the optical cables led out from the label modules of the optical fiber connector assemblies are led out from the plug-in frame 200 in a direction 205. The direction 205 is a vertical direction of the plug-in frame 200.

It should be clear that, in this example, description of an extension path of the optical cable connected to each optical fiber connector assembly in the plug-in frame 200 is an optional example, which is not limited, provided that the optical cables connected to different optical fiber connector assemblies do not intertwine with each other, thereby facilitating the sorting of the optical cables.

## Claims

1. An optical fiber connector assembly (500), wherein the optical fiber connector assembly (500) comprises an optical fiber connector body and a first label module,
the first label module (503, 1102) is connected to an optical cable (506), the optical cable (506) is connected to the optical fiber connector body, the first label module (503, 1102) has a first surface (601), the first surface (601) is configured to set label information, and the label information is used to identify the optical fiber connector body; and
the first label module (503, 1102) has a first connection structure and a second connection structure, the first connection structure is configured to connect the first label module (503, 1102) to a second label module (1103), the second connection structure is configured to connect the first label module (503, 1102) to a third label module (1104), and the first label module (503, 1102), the second label module (1103), and the third label module (1104) belong to three different optical fiber connector assemblies,
wherein the first label module (503, 1102) has a channel (611) through which the optical cable (506) passes, **characterized in that** a clamping member (610) is disposed on a second surface (602) of the first label module (503) in an extending way, and the channel (611) is formed between the clamping member (610) and the second surface (602),
wherein a rotation through hole (613) is disposed on the second surface (602), a rotation space (614) is disposed in the first label module (503, 1102), and the rotation space (614) communicates with the rotation through hole (613); the clamping member (610) comprises a clamping member body (615) and a first rotating arm (616) and a second rotating arm (617) that are connected to two ends of the clamping member body (615), both the first rotating arm (616) and the second rotating arm (617) are provided with a rotation recess (618), and an abutting protrusion (619) is formed at an end portion that is of the rotation recess (618) and that is away from the clamping member body (615); and the rotation through hole (613) comprises a first orifice (620) and a second orifice (621) that communicate with each other, the rotation recess (618) is inserted into the rotation through hole (613) via the first orifice (620), the abutting protrusion (619) abuts against an outer circumferential rim of the second orifice (621), and the outer circumferential rim of the second orifice (621) is located in the rotation space (614), so that the rotation recess (618) rotates in the rotation through hole (613).

2. The optical fiber connector assembly (500) according to claim 1, wherein the first connection structure is a clamping protrusion, a clamping groove, a dovetail, a dovetail groove, a buckle, a clamping slot, and/or a magnetic member; and the second connection structure is a clamping protrusion, a clamping groove, a dovetail, a dovetail groove, a buckle, a clamping slot, and/or a magnetic member.

3. The optical fiber connector assembly (500) according to claim 2, wherein the channel is formed between the clamping member body and the second surface (602).

4. The optical fiber connector assembly (500) according to any one of claims 1 to 3, wherein the first surface (601) faces away from the second surface (602) at positions, or the first surface (601) is connected to the second surface (602).

5. A label system, wherein the label system comprises a plug-in frame, a first optical fiber connector assembly according to any one of claims 1-4, and a second optical fiber connector assembly, and
the first optical fiber connector assembly and the second optical fiber connector assembly are inserted on the plug-in frame; the first optical fiber connector assembly comprises a first optical fiber connector body and a first label module (503, 1102), the second optical fiber connector assembly comprises a second optical fiber connector and a second label module (1103), first label information is set on a first surface (601) of the first label module (503, 1102), the first label information is used to identify the first optical fiber connector body, second label information is set on a first surface (601) of the second label module (1103), and the second label information is used to identify the second optical fiber connector body; and
the first label module (503, 1102) has a first connection structure, the second label module (1103) has a second connection structure, and the first label module (503, 1102) is connected to the second label module (1103) in a state in which the first connection structure is connected to the second connection structure.

6. The label system according to claim 5, wherein the label system further comprises a third optical fiber connector assembly, the third optical fiber connector assembly comprises a third optical fiber connector and a third label module (1104), third label information is set on a first surface (601) of the third label module (1104), and the third label information is used to identify the third optical fiber connector body; and the first label module (503, 1102) further has a second connection structure, the third label module (1104) has a first connection structure, and the first label module (503, 1102) is connected to the third label module (1104) in a state in which the first connection structure is connected to the second connection structure.

7. The label system according to claim 6, wherein the first connection structure of the first label module (503, 1102), the first connection structure of the second label module (1103), and the first connection structure of the third label module (1104) are the same; and the second connection structure of the first label module (503, 1102), the second connection structure of the second label module (1103), and the second connection structure of the third label module (1104) are the same.

8. The label system according to any one of claims 5 to 7, wherein the first connection structure is a clamping protrusion and the second connection structure is a clamping groove, and/or the first connection structure is a clamping groove and the second connection structure is a clamping protrusion, and/or the first connection structure is a dovetail and the second connection structure is a dovetail groove, and/or the first connection structure is a dovetail groove and the second connection structure is a dovetail, and/or the first connection structure is a buckle and the second connecting structure is a clamping slot, and/or the first connection structure is a clamping slot and the second connecting structure is a buckle, and/or the first connection structure is a first magnetic member and the second connection structure is a second magnetic member, wherein magnetic poles of the first magnetic member and the second magnetic member are different.

9. The label system according to claim 7 or 8, wherein the first surface (601) of the first label module (503, 1102), the first surface of the second label module (1103), and the first surface of the third label module (1104) are located on a same surface.

## Patentansprüche

1. Lichtleiterfaserverbinderanordnung (500), wobei die Lichtleiterfaserverbinderanordnung (500) einen Lichtleiterfaserverbinderkörper und ein erstes Etikettenmodul umfasst,
wobei das erste Etikettenmodul (503, 1102) mit einem optischen Kabel (506) verbunden ist, das optische Kabel (506) mit dem Lichtleiterfaserverbinderkörper verbunden ist, das erste Etikettenmodul (503, 1102) eine erste Oberfläche (601) aufweist, die erste Oberfläche (601) konfiguriert ist, Etiketteninformationen festzulegen, und die Etiketteninformationen verwendet werden, um den Lichtleiterfaserverbinderkörper zu identifizieren; und
das erste Etikettenmodul (503, 1102) eine erste Verbindungsstruktur und eine zweite Verbindungsstruktur aufweist, die erste Verbindungsstruktur konfiguriert ist, das erste Etikettenmodul (503, 1102) mit einem zweiten Etikettenmodul (1103) zu verbinden, die zweite Verbindungsstruktur konfiguriert ist, das erste Etikettenmodul (503, 1102) mit einem dritten Etikettenmodul (1104) zu verbinden und das erste Etikettenmodul (503, 1102), das zweite Etikettenmodul (1103) und das dritte Etikettenmodul (1104) drei verschiedenen Lichtleiterfaserverbinderanordnungen angehören,
wobei das erste Etikettenmodul (503, 1102) einen Kanal (611) aufweist, durch den das optische Kabel (506) verläuft,
**dadurch gekennzeichnet, dass** ein Klemmelement (610) an einer zweiten Oberfläche (602) des ersten Etikettenmoduls (503) in einer ausgedehnten Weise angeordnet ist und der Kanal (611) zwischen dem Klemmelement (610) und der zweiten Oberfläche (602) gebildet ist,
wobei ein Drehungsdurchgangsloch (613) an der zweiten Oberfläche (602) angeordnet ist, ein Drehungsraum (614) im ersten Etikettenmodul (503, 1102) angeordnet ist und der Drehungsraum (614) mit dem Drehungsdurchgangsloch (613) kommuniziert; das Klemmelement (610) einen Klemmelementkörper (615) und einen ersten Dreharm (616) und einen zweiten Dreharm (617), die mit zwei Enden des Klemmelementkörpers (615) verbunden sind, umfasst, sowohl der erste Dreharm (616) als auch der zweite Dreharm (617) mit einer Drehungsaussparung (618) versehen sind und ein anliegender Vorsprung (619) an einem Endabschnitt gebildet ist, der von der Drehungsaussparung (618) stammt und der vom Klemmelementkörper (615) entfernt ist; und das Drehungsdurchgangsloch (613) eine erste Mündung (620) und eine zweite Mündung (621) umfasst, die miteinander kommunizieren, die Drehungsaussparung (618) in das Drehungsdurchgangsloch (613) durch die erste Mündung (620) eingesetzt ist, der anliegende Vorsprung (619) an einem Außenumfangsrand der zweiten Mündung (621) anliegt und der Außenumfangsrand der zweiten Mündung (621) im Drehungsraum (614) angeordnet ist, derart, dass die Drehungsaussparung (618) sich im Drehungsdurchgangsloch (613) dreht.

2. Lichtleiterfaserverbinderanordnung (500) nach Anspruch 1, wobei die erste Verbindungsstruktur ein Klemmvorsprung, eine Klemmnut, ein Schwalbenschwanz, eine Schwalbenschwanznut, eine Schnalle, eine Klemmaussparung und/oder ein Magnetelement ist und die zweite Verbindungsstruktur ein Klemmvorsprung, eine Klemmnut, ein Schwalbenschwanz, eine Schwalbenschwanznut, eine Schnalle, eine Klemmaussparung und/oder ein Magnetelement ist.

3. Lichtleiterfaserverbinderanordnung (500) nach Anspruch 2, wobei der Kanal zwischen dem Klemmelementkörper und der zweiten Oberfläche (602) gebildet ist.

4. Lichtleiterfaserverbinderanordnung (500) nach einem der Ansprüche 1 bis 3, wobei die erste Oberfläche (601) bei Positionen von der zweite Oberfläche (602) abgewandt ist oder die erste Oberfläche (601) mit der zweiten Oberfläche (602) verbunden ist.

5. Etikettensystem, wobei das Etikettensystem einen Einsteckrahmen, eine erste Lichtleiterfaserverbinderanordnung nach einem der Ansprüche 1-4 und eine zweite Lichtleiterfaserverbinderanordnung umfasst, und
wobei die erste Lichtleiterfaserverbinderanordnung und die zweite Lichtleiterfaserverbinderanordnung in den Einsteckrahmen eingesetzt sind; die erste Lichtleiterfaserverbinderanordnung einen ersten Lichtleiterfaserverbinderkörper und ein erstes Etikettenmodul (503, 1102) umfasst, die zweite Lichtleiterfaserverbinderanordnung einen zweiten Lichtleiterfaserverbinder und ein zweites Etikettenmodul (1103) umfasst, erste Etiketteninformationen an eine erste Oberfläche (601) des ersten Etikettenmoduls (503, 1102) gesetzt sind, die ersten Etiketteninformationen verwendet werden, um den ersten Lichtleiterfaserverbinderkörper zu identifizieren, zweite Etiketteninformationen an eine erste Oberfläche (601) des zweiten Etikettenmoduls (1103) gesetzt sind und die zweiten Etiketteninformationen verwendet werden, um den zweiten Lichtleiterfaserverbinderkörper zu identifizieren; und
das erste Etikettenmodul (503, 1102) eine erste Verbindungsstruktur aufweist, das zweite Etikettenmodul (1103) eine zweite Verbindungsstruktur aufweist und das erste Etikettenmodul (503, 1102) mit dem zweiten Etikettenmodul (1103) in einem Zustand verbunden ist, in dem die erste Verbindungsstruktur mit der zweiten Verbindungsstruktur verbunden ist.

6. Etikettensystem nach Anspruch 5, wobei das Etikettensystem ferner eine dritte Lichtleiterfaserverbinderanordnung umfasst, die dritte Lichtleiterfaserverbinderanordnung einen dritten Lichtleiterfaserverbinder und ein drittes Etikettenmodul (1104) umfasst, dritte Etiketteninformationen an eine erste Oberfläche (601) des dritten Etikettenmoduls (1104) gesetzt sind und die dritten Etiketteninformationen verwendet werden, um den dritten Lichtleiterfaserverbinderkörper zu identifizieren; und das erste Etikettenmodul (503, **1102)** ferner eine zweite Verbindungsstruktur aufweist, das dritte Etikettenmodul (1104) eine erste Verbindungsstruktur aufweist und das erste Etikettenmodul (503, 1102) mit dem dritten Etikettenmodul (1104) in einem Zustand verbunden ist, in dem die erste Verbindungsstruktur mit der zweiten Verbindungsstruktur verbunden ist.

7. Etikettensystem nach Anspruch 6, wobei die erste Verbindungsstruktur des ersten Etikettenmoduls (503, 1102), die erste Verbindungsstruktur des zweiten Etikettenmoduls (1103) und die erste Verbindungsstruktur des dritten Etikettenmoduls (1104) gleich sind und die zweite Verbindungsstruktur des ersten Etikettenmoduls (503, 1102), die zweite Verbindungsstruktur des zweiten Etikettenmoduls (1103) und die zweite Verbindungsstruktur des dritten Etikettenmoduls (1104) gleich sind.

8. Etikettensystem nach einem der Ansprüche 5 bis 7, wobei die erste Verbindungsstruktur ein Klemmvorsprung ist und die zweite Verbindungsstruktur eine Klemmnut ist und/oder die erste Verbindungsstruktur eine Klemmnut ist und die zweite Verbindungsstruktur ein Klemmvorsprung ist und/oder die erste Verbindungsstruktur ein Schwalbenschwanz ist und die zweite Verbindungsstruktur eine Schwalbenschwanznut ist und/oder die erste Verbindungsstruktur eine Schwalbenschwanznut ist und die zweite Verbindungsstruktur ein Schwalbenschwanz ist und/oder die erste Verbindungsstruktur eine Schnalle ist und die zweite Verbindungsstruktur eine Klemmaussparung ist und/oder die erste Verbindungsstruktur eine Klemmaussparung ist und die zweite Verbindungsstruktur eine Schnalle ist und/oder die erste Verbindungsstruktur ein erstes Magnetelement ist und die zweite Verbindungsstruktur ein zweites Magnetelement ist, wobei Magnetpole des ersten Magnetelements und des zweiten Magnetelements verschieden sind.

9. Etikettensystem nach Anspruch 7 oder 8, wobei die erste Oberfläche (601) des ersten Etikettenmoduls (503, 1102), die erste Oberfläche des zweiten Etikettenmoduls (1103) und die erste Oberfläche des dritten Etikettenmoduls (1104) an derselben Oberfläche angeordnet sind.

## Revendications

1. Ensemble connecteur de fibres optiques (500), l'ensemble connecteur de fibres optiques (500) comprenant un corps de connecteur de fibres optiques et un premier module d'étiquetage,
le premier module d'étiquetage (503, 1102) étant raccordé à un câble optique (506), le câble optique (506) étant raccordé au corps du connecteur de fibres optiques,
le premier module d'étiquetage (503, 1102) ayant une première surface (601), la première surface (601) étant configurée de façon à porter des informations d'étiquette, et les informations d'étiquette étant utilisées pour identifier le corps du connecteur de fibres optiques ; et
le premier module d'étiquetage (503, 1102) ayant une première structure de raccordement et une deuxième structure de raccordement, la première structure de raccordement étant configurée de façon à raccorder le premier module d'étiquetage (503, 1102) à un deuxième module d'étiquetage (1103), la deuxième structure de raccordement étant configurée de façon à raccorder le premier module d'étiquetage (503, 1102) à un troisième module d'étiquetage (1104), et le premier module d'étiquetage (503, 1102), le deuxième module d'étiquetage (1103) et le troisième module d'étiquetage (1104) appartenant à trois ensembles connecteurs de fibres optiques différents,
le premier module d'étiquetage (503, 1102) ayant une voie (611) à travers laquelle passe le câble optique (506),
**caractérisé en ce qu'**un élément de serrage (610) est disposé sur une deuxième surface (602) du premier module d'étiquetage (503) d'une manière prolongée, et **en ce que** la voie (611) est formée entre l'élément de serrage (610) et la deuxième surface (602), un trou traversant de rotation (613) étant disposé sur la deuxième surface (602), un espace de rotation (614) étant disposé dans le premier module d'étiquetage (503, 1102), et l'espace de rotation (614) communiquant avec le trou traversant de rotation (613) ; l'élément de serrage (610) comprenant un corps d'élément de serrage (615) et un premier bras rotatif (616) et un deuxième bras rotatif (617) qui sont raccordés à deux extrémités du corps d'élément de serrage (615), le premier bras rotatif (616) et le deuxième bras rotatif (617) étant tous les deux pourvus d'un évidement de rotation (618), et une saillie contigüe (619) étant formée à une partie extrême qui appartient à l'évidement de rotation (618) et qui est éloignée du corps d'élément de serrage (615) ; et le trou traversant de rotation (613) comportant un premier orifice (620) et un deuxième orifice (621) qui communiquent l'un avec l'autre, l'évidement de rotation (618) étant inséré dans le trou traversant de rotation (613) via le premier orifice (620), la saillie contigüe (619) butant contre un rebord circonférentiel extérieur du deuxième orifice (621), et le rebord circonférentiel extérieur du deuxième orifice (621) étant situé dans l'espace de rotation (614), de telle sorte que l'évidement de rotation (618) tourne dans le trou traversant de rotation (613).

2. Ensemble connecteur de fibres optiques (500) selon la revendication 1, dans lequel la première structure de raccordement est une saillie de serrage, une rainure de serrage, une queue d'aronde, une rainure en queue d'aronde, une boucle, une fente de serrage et/ou un élément magnétique ; et dans lequel la deuxième structure de raccordement est une saillie de serrage, une rainure de serrage, une queue d'aronde, une rainure en forme de queue d'aronde, une boucle, une fente de serrage et/ou un élément magnétique.

3. Ensemble connecteur de fibres optiques (500) selon la revendication 2, dans lequel la voie est formée entre le corps d'élément de serrage et la deuxième surface (602).

4. Ensemble connecteur de fibres optiques (500) selon l'une quelconque des revendications 1 à 3, dans lequel la première surface (601) est orientée dans un sens opposé à la deuxième surface (602) dans des positions, ou la première surface (601) est raccordée à la deuxième surface (602).

5. Système d'étiquetage, le système d'étiquetage comprenant un cadre d'insertion, un premier ensemble connecteur de fibres optiques selon l'une quelconque des revendications 1 à 4 et un deuxième ensemble connecteur de fibres optiques, et
le premier ensemble connecteur de fibres optiques et le deuxième ensemble connecteur de fibres optiques étant insérés sur le cadre d'insertion ; le premier ensemble connecteur de fibres optiques comprenant un premier corps de connecteur de fibres optiques et un premier module d'étiquetage (503, 1102), le deuxième ensemble connecteur de fibres optiques comprenant un deuxième connecteur de fibres optiques et un deuxième module d'étiquetage (1103), des premières informations d'étiquetage étant indiquées sur une première surface (601) du premier module d'étiquetage (503, 1102), les premières informations d'étiquetage étant utilisées pour identifier le premier corps de connecteur de fibres optiques, les deuxièmes informations d'étiquetage étant indiquées sur une première surface (601) du deuxième module d'étiquetage (1103), et les deuxièmes informations d'étiquetage étant utilisées pour identifier le deuxième corps de connecteur de fibres optiques ; et
le premier module d'étiquetage (503, 1102) ayant une première structure de raccordement, le deuxième module d'étiquetage (1103) ayant une deuxième structure de raccordement, et le premier module d'étiquetage (503, 1102) étant raccordé au deuxième module d'étiquetage (1103) dans un état dans lequel la première structure de raccordement est raccordée à la deuxième structure de raccordement.

6. Système d'étiquetage selon la revendication 5, le système d'étiquetage comprenant en outre un troisième ensemble connecteur de fibres optiques, le troisième ensemble connecteur de fibres optiques comprenant un troisième connecteur de fibres optiques et un troisième module d'étiquetage (1104), des troisièmes informations d'étiquetage étant indiquées sur une première surface (601) du troisième module d'étiquetage (1104), et les troisièmes informations d'étiquetage étant utilisées pour identifier le troisième corps de connecteur de fibres optiques ; et le premier module d'étiquetage (503, 1102) ayant en outre une deuxième structure de raccordement, le troisième module d'étiquetage (1104) ayant une première structure de raccordement, et le premier module d'étiquetage (503, 1102) étant raccordé au troisième module d'étiquetage (1104) dans un état dans lequel la première structure de raccordement est raccordée à la deuxième structure de raccordement.

7. Système d'étiquetage selon la revendication 6, dans lequel la première structure de raccordement du premier module d'étiquetage (503, 1102), la première structure de raccordement du deuxième module d'étiquetage (1103), et la première structure de raccordement du troisième module d'étiquetage (1104) sont les mêmes ; et la deuxième structure de raccordement du premier module d'étiquetage (503, 1102), la deuxième structure de raccordement du deuxième module d'étiquetage (1103), et la deuxième structure de raccordement du troisième module d'étiquetage (1104) sont les mêmes.

8. Système d'étiquetage selon l'une quelconque des revendications 5 à 7, dans lequel la première structure de raccordement est une saillie de serrage et la deuxième structure de raccordement est une rainure de serrage, et/ou la première structure de raccordement est une rainure de serrage et la deuxième structure de raccordement est une saillie de serrage, et/ou la première structure de raccordement est une queue d'aronde et la deuxième structure de raccordement est une rainure en queue d'aronde, et/ou la première structure de raccordement est une rainure en queue d'aronde et la deuxième structure de raccordement est une queue d'aronde, et/ou la première structure de raccordement est une boucle et la deuxième structure de raccordement est une fente de serrage, et/ou la première structure de raccordement est une fente de serrage et la deuxième structure de raccordement est une boucle, et/ou la première structure de raccordement est un premier élément magnétique et la deuxième structure de raccordement est un deuxième élément magnétique, les pôles magnétiques du premier élément magnétique et du deuxième élément magnétique étant différents.

9. Système d'étiquetage selon la revendication 7 ou 8, dans lequel la première surface (601) du premier module d'étiquetage (503, 1102), la première surface du deuxième module d'étiquetage (1103), et la première surface du troisième module d'étiquetage (1104) sont situées sur une même surface.
